# EUROPEAN PATENT SPECIFICATION

(11) **EP 3 415 927 B1**
(45) Date of publication and mention of the grant of the patent: **06.11.2019**
(21) Application number: 17176285.9
(22) Date of filing: 15.06.2017
(51) Int. Cl.: G01P 15/16, G01F 1/46

(54) **FORMING AN AIR DATA PROBE FROM A POROUS COVER AND BRAZING MATERIAL**
HERSTELLUNG EINER LUFTDATENSONDE AUS EINER PORÖSEN ABDECKUNG UND LÖTMATERIAL
FORMATION D'UNE SONDE DE DONNÉES AÉRODYNAMIQUES À PARTIR D'UN REVÊTEMENT POREUX ET D'UN MATÉRIAU DE BRASAGE

(43) Date of publication of application: 19.12.2018
(73) Proprietor: Honeywell International Inc., Morris Plains, NJ 07950 (US)
(72) Inventor: GORDON, Grant A., Morris Plains, NJ 07950 (US); PERUBANDI, Dayakara Raju, Morris Plains, NJ 07950 (US); POHLMAN, Matthew J., Morris Plains, NJ 07950 (US); ANDERSON, Morris G., Morris Plains, NJ 07950 (US)
(74) Representative: Houghton, Mark Phillip

(56) References cited:
- WO-A1-98/16837
- US-A- 2 254 155

## Description

### BACKGROUND

Conventionally, air data probes are fabricated by brazing components together to assemble a probe with a given aerodynamic shape. These air data probes include a mechanism to generate heat to deice and maintain an ice-free condition while operating in adverse weather conditions. The anti-icing and de-icing requirements are the subject of a number of Aerospace Standards and Aerospace Recommended Practices. In 2014, the Department of Transportation and the Federal Aviation Administration, issued a new rule in order to improve probe safety by addressing super-cooled large drop icing conditions, mixed phase and ice crystal icing conditions. As a result of these new regulations, the challenge of meeting the anti-ice and deicing requirements for air data probes has become significantly more demanding.

One approach to meet these new demands is to place the heating source (e.g., heater cable) closer to the external surface of the probe portion of the air data probe. Unfortunately, with current fabrication techniques, the probe body may develop gaps around the heat source leading to reduced mechanical strength as well as hot spots within the heater cable and cold spots on the exterior surface of the probe. The hot spots in the cable will lead to accelerated heater cable aging and the cold spots of the exterior surface will act as nucleation sites for ice formation during service.

For the reasons stated above and for other reasons stated below which will become apparent to those skilled in the art upon reading and understanding the specification, there is a need in the art for improved systems and methods for fabricating air data probes that distribute heat more uniformly over the exterior surface of the probe portion of the air data probe.

WO 98/16837 discloses an air data probe such as a pitot probe, pitot-static probe, or total air temperature probe that incorporates heaters within the wall of the device. The heater is in the wall of the probe and extends from the base of the probe to the tip of the probe and surrounds a sampling chamber in the probe in a spiral pattern. US2,254,155 discloses a pitot-static tube comprising a metal tubular section.

### SUMMARY

The Embodiments of the present invention provide methods and systems for forming a probe portion for an air data probe from a porous cover and a brazing material and will be understood by reading and studying the following specification.

In one embodiment, a probe portion of an air data probe is provided. The probe portion includes an endoskeleton structure having an outer surface, a heater cable disposed along the outer surface of the endoskeleton structure, a porous cover, surrounding the endoskeleton structure and heater cable, and a braze filler that substantially fills gaps between the heater cable and the endoskeleton structure and that substantially fills gaps in the porous metal cover.

### DRAWINGS

Embodiments of the present invention can be more easily understood and further advantages and uses thereof more readily apparent, when considered in view of the description of the preferred embodiments and the following figures in which:
Figure 1 is a perspective view of one embodiment of an air data probe with a probe constructed from a porous cover and a brazing material that embeds a heating element between the porous cover and an endoskeleton structure;
Figure 2 is a perspective view of one embodiment of a probe for an air data probe including an endoskeleton structure and a porous cover;
Figure 3 is a cross-section view of one embodiment of a probe for an air data probe;
Figure 4 is a cross-section view of one embodiment of a probe for an air data probe;
Figure 5 is a perspective view of another embodiment of an endoskeleton structure for a probe of an air data probe;
Figure 6 is a cross-section view of another embodiment of a probe for an air data probe;
Figure 7 is a cross-section view of another embodiment of a probe for an air data probe;
Figures 8A to 8E are perspective views of various embodiments for a porous cover for a probe for an air data probe; and
Figure 9 is a flow chart for an embodiment of a process for manufacturing an air data probe.

In accordance with common practice, the various described features are not drawn to scale but are drawn to emphasize features relevant to the present invention. Reference characters denote like elements throughout figures and text.

### DETAILED DESCRIPTION

In the following detailed description, reference is made to the accompanying drawings that form a part hereof, and in which is shown by way of specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

Embodiments of the present invention provide an air data probe that distributes heat more uniformly over the exterior surface of the probe portion of the air data probe. Embodiments of the present invention use an endoskeleton design along with a braze filler to create the probe portion of the air data probe. In one embodiment, the endoskeleton structure is used in conjunction with a wide gap braze material to mount the heater cable on outer surface/side of the endoskeleton structure using brazing techniques other than torch brazing. In other embodiments, the probe portion of the air data probe is fabricated with a porous cover that is placed over the endoskeleton structure to provide a supply of braze filler material while the brazing process is under way to form the probe portion without gaps around the heater cable. In other embodiments, two or more braze filler formulations in layers are used to simultaneously satisfy the need to fill the small cracks and voids and to keep the braze filler in place during the braze cycle as well as to provide a reservoir of braze filler to occupy the space generated due to shrinkage.

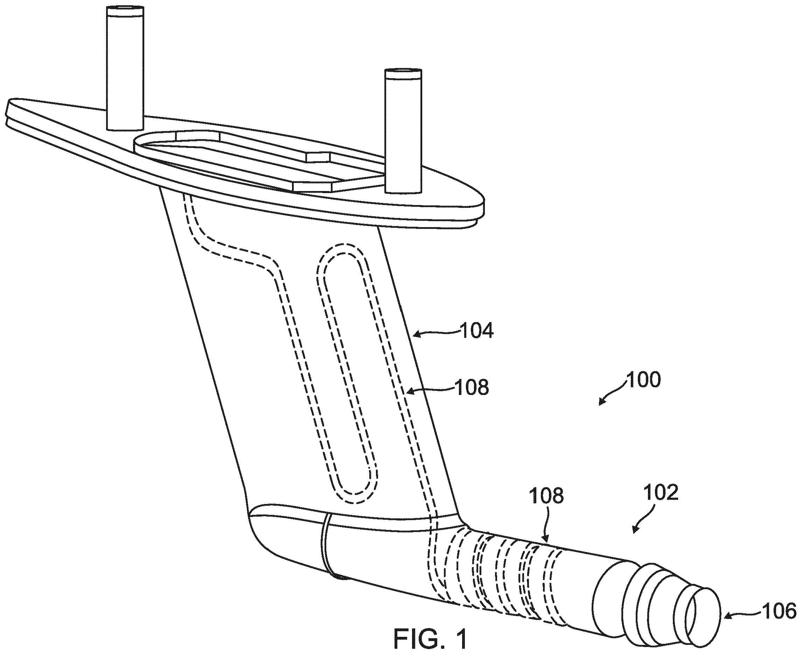

Figure 1 is a perspective view of an air data probe 100 according to one embodiment of the present disclosure. The air data probe 100 includes a probe portion 102 and a strut portion 104 that connects the probe portion 102 to a vehicle. In exemplary embodiments, the probe portion 102 is a pitot tube, pitot-static tube, or the like. The probe portion 102 is positioned so air enters the probe portion 102 through the inlet 106. In one implementation, the air data probe 100 is used to determine the airspeed of an aircraft. To prevent ice buildup, air data probe 100 includes a heating element 108 that is formed within the structure of both the probe portion 102 and the strut portion 104.

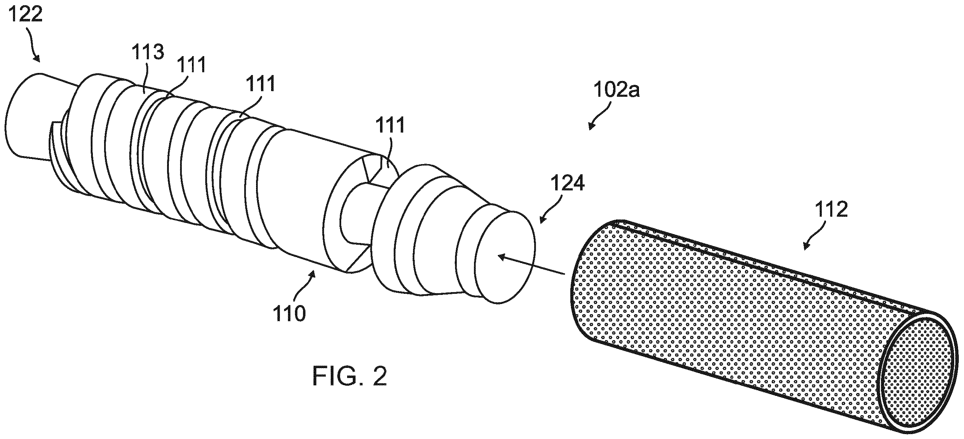

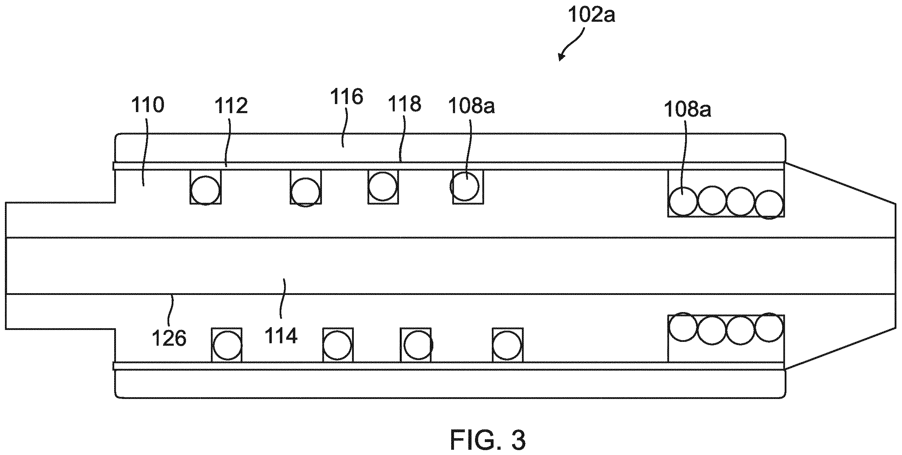

Figures 2 and 3 illustrate one embodiment of a probe portion 102a for use, for example, in air data probe 100 of Figure 1. In this embodiment, probe portion 102a includes an endoskeleton design and fabrication approach to meet the new demands regarding anti-icing and deicing. The endoskeleton design of this embodiment uses a grooved probe body to wrap and locate a heater cable in the probe portion 102a.

The endoskeleton design includes endoskeleton structure (probe body) 110 and porous cover 112. The endoskeleton structure 110 has a proximal end 122 and a distal end 124. The proximal end 122 of the endoskeleton structure 110 is coupled, for example, to strut 104 of Figure 1. The endoskeleton structure 110 includes an outer surface 113 and an opposing inner surface 126 that define an interior channel 114 between the proximal end 122 and the distal end 124 of the endoskeleton structure 110. The interior channel 114 has an opening for receiving a fluid at the distal end 124 of the endoskeleton structure 110.

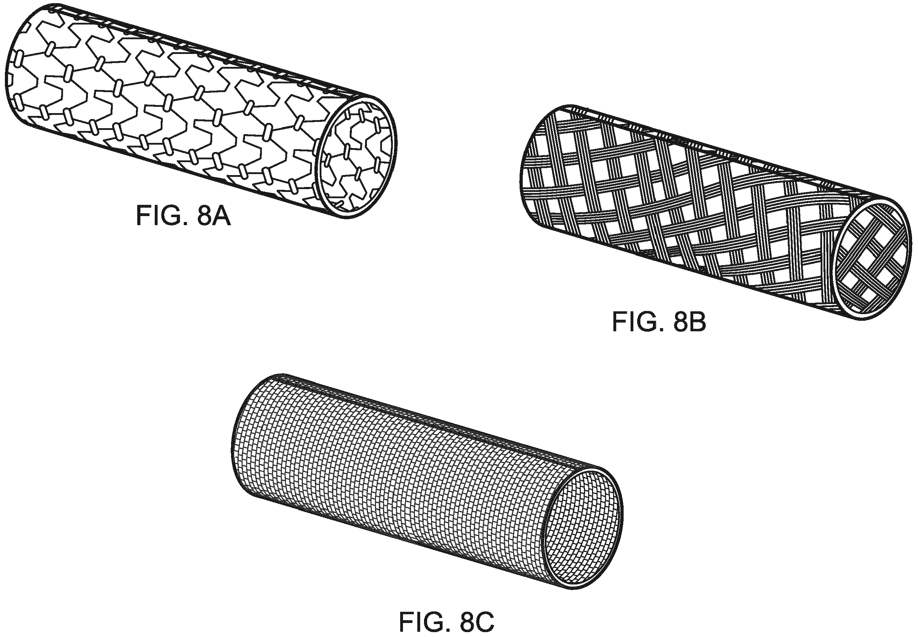

Endoskeleton structure 110 also includes a channel 111 formed in outer surface 113 of endoskeleton structure 110. Heater cable 108a is wrapped around endoskeleton structure 110 in the channel 111. In some embodiments, braze paste is applied to this wrapped assembly. Porous cover 112 is slid in place over endoskeleton structure 110. Various embodiments for porous cover 112 are shown by way of example and not by way of limitation in Figures 8A to 8E described in more detail below. A layer of brazing material 116 is applied to an exterior surface of porous cover 112. In many embodiments, porous cover 112 is a metal mesh that has gaps that allow brazing material to flow through the porous cover 112 during a brazing process into gaps as described in more detail below.

Porous cover 112 is intended to capture the braze paste inside a pocket formed between the endoskeleton structure 110 and the porous cover 112. In some embodiments, the braze material is applied in a paste form consisting of an atomized metal powder, a flux (when necessary) and a binder to hold the components together in suspension. Pastes can be controlled with the correct dispensing equipment and hence tight control can be maintained on material usage in a production environment. However the gel-binder, which is generally mixed with equal parts with the filler metal, is consumed by the firing/brazing process. When braze material is applied as a diy powder the packing factor of the powder also leads to a volume contraction between the dry powder and the final braze condition. Hence the volume of the applied braze material shrinks during the brazing operation. Unless an additional supply of braze material is available to replace the lost volume the amount of braze material inside a sealed volume shrinks and voids are inevitable. To avoid this situation, layer of brazing material 116 is applied to surface 118 of porous cover 112.

Once layer of brazing material 116 is applied, endoskeleton structure 110, heating cable 108a, porous cover 112, and layer of brazing material 116 are heated to a point to melt the brazing material 116. Advantageously, the brazing material fills the holes in the porous cover 112 as well as any gaps between the heating cable 108a and the channel 111.

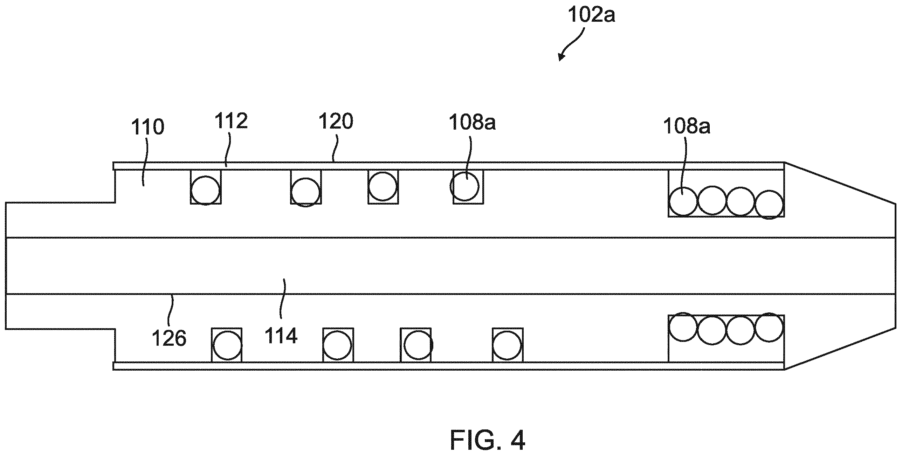

External surface 120 of probe portion 102 is machined to provide a final, finished surface corresponding to a desired shape for the probe portion 102 as shown in cross section in Figure 4.

Placing the heater cable 108 closer to the external surface 120 of the probe portion 102a improves the anti-icing and de-icing capabilities of the probe portion for a given input power. The design of probe portion 102a also allows for more generous curvature of the heater cable 108a as compared to the tighter coils that would be needed to slip the heater cable into the interior of the probe body, e.g., in channel 111. Both of these features are advantageous.

Gap size is a parameter that can be used to achieve a good braze. The gap size is generally chosen to match the alloy used for the brazing operation. For example flux brazing applications of Silver brazes calls for a joint clearance of 0.002 to 0.005 inch. This gap is known to provide sufficient capillarity action to draw the liquid metal formed at the braze temperatures into the gaps and cracks. A combination of surface tension and adhesion forces cause the liquid to move into the narrow spaces overcoming any gravitational attraction for that small volume of material. This capillary action has its limits however and when the gaps are too large the gravitation forces dominate and the liquid braze flows into puddles. These puddles of braze material may cause voids. For example, if a traditional cover is used in place of porous cover 112 (and layer of brazing material 116), the gaps in the channel 111 may be too large for the capillary action necessary to fill the voids between the heater cable 108 and the channel 111 thereby leaving voids in the probe portion 102.

To overcome this potential problem, the probe portion 102a in this embodiment is produced using an endoskeleton brazing approach that provides a supply of braze material. The supply of brazing material is the layer of brazing material 116 on porous cover 112. This layer of brazing material 116 along with the porous cover 112 accommodates the shrinkage and inhibits drainage of the braze materials so that they do not drain away when heated.

In addition, in some embodiments, a wide gap brazing approach is used. Wide gap brazing approaches recognizes that certain complex brazing applications may not be able to hold the necessary gap tolerance across the entire interface/geometry. There are at least two kinds of wide gap braze powder that have been developed specifically to treat these conditions. First there are alloys that have a chemical makeup that results in a sluggish, mushy alloy at their 'melting point.' Braze pastes made from these alloys can be used to bridge wider gaps than standard braze pastes. The second type of wide-gap paste is a blend of a braze alloy plus a filler powder. The filler metal melts at a higher temperature than the braze alloy and hence forms a mushy less liquid braze at the braze temperature. Specific wide gap braze pastes can be made by blending various ratios of filler powder with the braze alloy. The size of the powder is also a consideration that can allow the wide gap braze paste to be dialed in to a given gap size. In some embodiments, the wide gap braze paste is applied to surface 113 of endoskeleton structure 110 and channel 111 prior to placement of porous cover 112.

By controlling the hole size and porosity fraction of the porous cover 112, the porous cover 112 can act as a structure that provides a place for the additional externally applied 'extra' braze alloy in layer of brazing material 116 to feed the braze joint. This will supply additional braze material when the volume contraction occurs as the organic binder is burned out or the dry powder volume contracts. The porous network acts to provide a mesh of connected surface area that helps the mushy, sluggish wide gap braze paste further resist puddling.

As mentioned, the porous cover 112 is machined to final profile shape for the probe portion 102 after the brazing process. To facilitate machining a ductile mesh material should be used, such as the materials shown and described below with respect to Figures 8A to 8E. In some embodiments, Nickel plating of the shaped probe portion 102a is used as a final step.

It should be understood that there is an interplay between the viscosity of the hot braze alloy (ratio of filler to alloy, mesh size of filler), the surface area of the porous cover 112, the mesh hole size, the cohesion forces within the braze material and the gaps that exist across the braze zone. And the area to be brazed has various gaps sizes. Starting at the channel 111, where the heater cable 108 touches the base of the channel 111, the gaps can be small. Working towards the surface 113 of the endoskeleton structure 1 10, the gaps will increase in size because the heater cable 108 has a round cross-section and the groove is substantially square or rectangular is cross-section as shown in Figure 3. Finally at the interface between the porous cover 112 and the endoskeleton structure 110, the gaps between adjacent metal materials is at its largest.

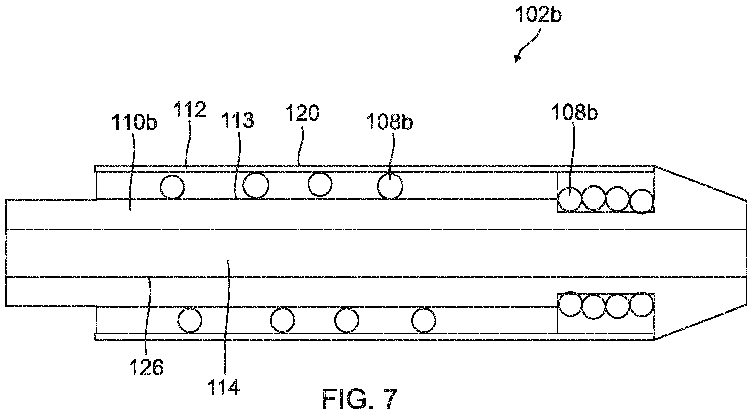

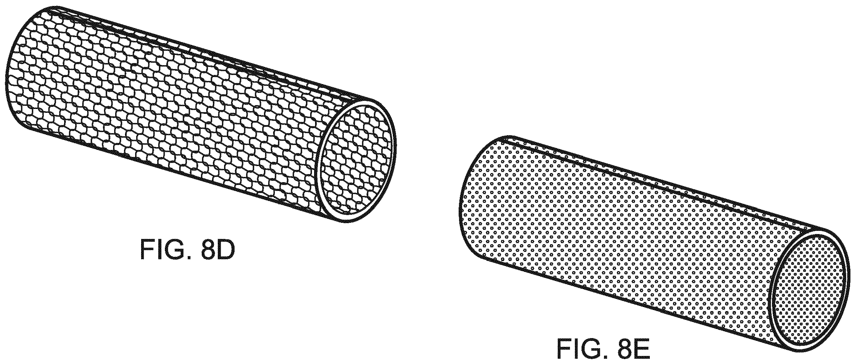

Figures 8A to 8E illustrate a variety of inexpensive porous metal covers that could be considered for use as the outer metal mesh or porous cover, e.g., porous cover 112 of Figures 2-7, of the air data probe. Most of these metal forms can be made with a variety of materials such as: Stainless Steels, Titanium, Nitinol, Nickel Alloys, Platinum Alloys, Magnesium Alloys, Niobium, etc. Figure 8A illustrates a porous cover formed as an expandable cage or stent. The porous cover can be formed using other techniques, e.g., knitted wire mesh (Figure 8D), braided metal mesh (Figure 8B), perforated tubes (Figure 8C), and sintered mesh or filter tubes (Figure 8E). The open area of the porous cover can be varied from highly porous (Figure 8B) to micron size holes, such as for the sintered filter tubes shown in Figures 8E. Given that each of these forms can be made in a variety of configuration there is clearly plenty of choice for metal mesh covers.

Because the gap sizes vary within the braze zone it may be necessary to have two braze formulations. A lower viscosity braze material could be used in the groove region and a higher viscosity braze material e.g. due to braze filler mixing, could be loaded onto the outer metal porous covering of the probe.

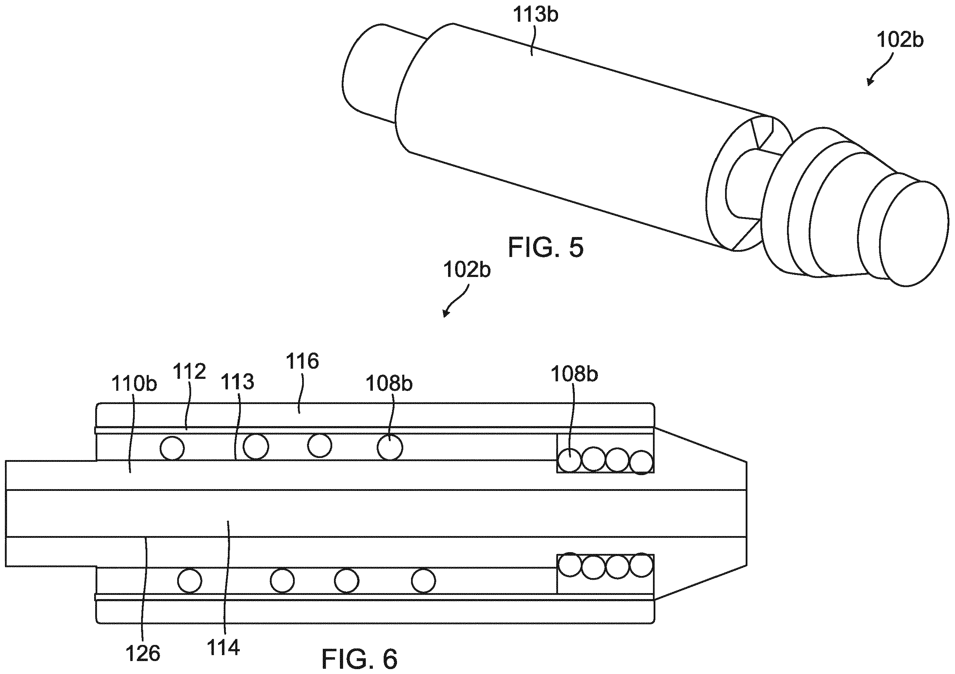

Figures 5-7 illustrate an alternative embodiment of a probe portion 102b for an air data probe such as air data probe 100 of Figure 1 in which the endoskeleton body 110b does not have a channel for in exterior surface 113. Instead, the heater cable 108b is wrapped around endoskeleton structure 110b on surface 113. Otherwise, the reference numerals in Figures 5-7 correspond to like structures as in Figures 2-4. In this embodiment, brazing material may be applied to surface 113 of endoskeleton structure in addition to layer of brazing material 116 that is applied to porous cover 112.

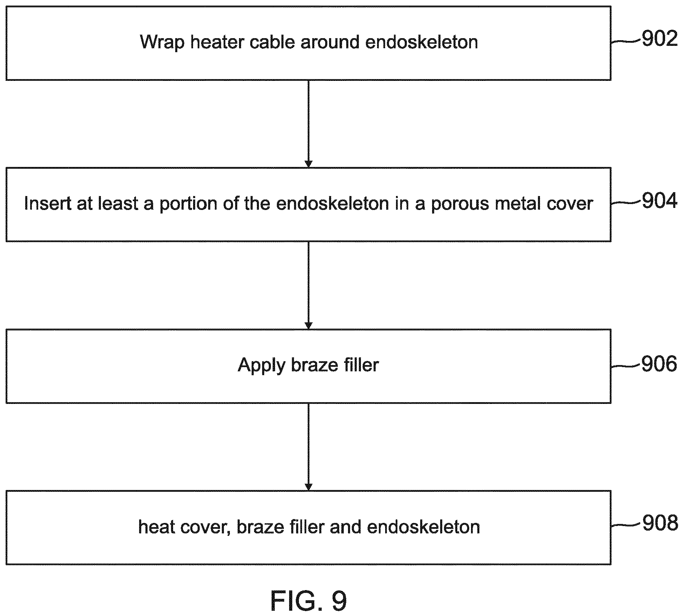

Figure 9 illustrates an embodiment of a process for manufacturing an air data probe. Specifically, a process for forming the probe portion of the air data probe such as probe portion 102a or 102b described above. The method begins at block 902 with wrapping the heater cable around an endoskeleton structure. The heater cable can either be wrapped in a channel 111 in a surface 113 of the endoskeleton structure 110 as in Figures 2-4 or around the surface 113 of the endoskeleton structure 110b as shown in Figures 4-7. Additionally, as discussed above, a lower viscosity braze filler may be applied in the channel area or over the surface of the endoskeleton structure prior to wrapping the heater cable. Further, the lower viscosity braze filler may be applied to fill any remaining spaces between the cable and the channel as appropriate.

At block 904, at least a portion of the endoskeleton structure is inserted into a porous metal cover. Further, at block 906 a braze material is applied to the porous cover. For example, the covered assembly is rolled in a higher viscosity braze filler to load the porous cover with braze material such that the porous cover acts like a metal sponge to hold a quantity of braze filler. At block 908, the assembly is sent through a vacuum furnace cycle. The porous cover could then be machined to provide the desired shape for the probe portion of the air data probe. Additionally, in some embodiments, the exterior surface, after machining, is plated with a Nickel material.

In an alternative embodiment, the filler powder could be used between the heater cable and endoskeleton structure at block 902 while lower viscosity braze paste would be loaded onto the porous cover at block 906. The braze alloy would wick into the inner region from the outer wrapped and loaded porous cover (e.g., metal sponge).

There are also some inherent advantages of porous metal covering approach over the present design approach. The metal sponge approach can accommodate a multistep braze method to build up the outer surface thickness through repetitive application. Or it can be repaired and re-brazed in the case of errors, whereas the solid metal cover is not conducive to easy repair or multiple braze steps.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims

## Claims

1. A probe portion (102) of an air data probe (100), the probe portion comprising:
an endoskeleton structure (110) having an outer surface (113);
a heater cable (108, 108a) disposed along the outer surface of the endoskeleton structure;
a porous cover (112), surrounding the endoskeleton structure and heater cable; and
a braze filler that substantially fills gaps between the heater cable and the endoskeleton structure and that substantially fills gaps in the porous metal cover.

2. The probe portion of claim 1, wherein the outer surface of the endoskeleton contains a channel (111) and wherein the heater cable is disposed in the channel.

3. The probe portion of claim 1, wherein the porous cover comprises a mesh fabricated from one or more of Stainless Steel, Titanium, Nitinol, a Nickel Alloy, a Platinum Alloy, a Magnesium Alloy, or Niobium.

4. The probe portion of claim 1, wherein the porous cover comprises one of an expandable metal stent, a knitted wire mesh, a braided metal mesh, a perforated tube, or a sintered mesh tube.

5. The probe portion of claim 1, wherein the braze filler comprises first and second braze materials having different viscosities, wherein the viscosity of the first braze material is higher than the viscosity of the second braze material.

6. A method for forming a probe for an air data probe, the method comprising:
wrapping a heater cable around an endoskeleton structure (902);
inserting at least a portion of the endoskeleton structure and heater cable into a porous metal cover (904);
applying a braze filler to the porous metal cover (906); and
heating the porous metal cover, braze filler and endoskeleton structure (908) so that the braze filler substantially fills gaps between the heater cable and the endoskeleton structure and substantially fills gaps in the porous metal.

7. The method of claim 6, wherein wrapping the heater cable around the endoskeleton structure comprises wrapping the heater cable in a channel on an outer surface of the endoskeleton structure.

8. The method of claim 6, wherein applying a braze filler comprises applying a first braze filler having a first, lower viscosity in the channel, and applying a second braze filler having a second, higher viscosity to the porous metal cover.

9. The method of claim 6, wherein inserting at least a portion of the endoskeleton structure comprises inserting at least a portion of the endoskeleton structure into one of an expandable metal stent, a knitted wire mesh, a braided metal mesh, a perforated tube, or a sintered mesh tube.

10. The method of claim 6, and further comprising machining an exterior surface of the porous metal cover after heating the porous metal cover, braze filler and endoskeleton structure.

## Patentansprüche

1. Sondenabschnitt (102) einer Luftdatensonde (100), wobei der Sondenabschnitt Folgendes umfasst:
eine Innenskelettstruktur (110) mit einer Außenfläche (113),
ein Heizkabel (108, 108a), das entlang der Außenfläche der Innenskelettstruktur angeordnet ist,
eine poröse Abdeckung (112), welche die Innenskelettstruktur und das Heizkabel umgibt, und
eine Hartlotfüllmasse, die Spalte zwischen dem Heizkabel und der Innenskelettstruktur im Wesentlichen füllt und die Spalte in der porösen Metallabdeckung im Wesentlichen füllt.

2. Sondenabschnitt nach Anspruch 1, wobei die Außenfläche des Innenskeletts einen Kanal (111) enthält und das Heizkabel in dem Kanal angeordnet ist.

3. Sondenabschnitt nach Anspruch 1, wobei die poröse Abdeckung ein Gitter umfasst, das aus einem oder mehreren des Folgenden gefertigt ist: Edelstahl, Titan, Nitinol, einer Nickellegierung, einer Platinlegierung, einer Magnesiumlegierung oder Niob.

4. Sondenabschnitt nach Anspruch 1, wobei die poröse Abdeckung einen ausdehnbaren Metall-Stent oder ein gewirktes Drahtgitter oder ein geflochtenes Metallgitter oder eine perforierte Röhre oder eine gesinterte Gitterröhre umfasst.

5. Sondenabschnitt nach Anspruch 1, wobei die Hartlotfüllmasse ein erstes und ein zweites Hartlotmaterial umfasst, die unterschiedliche Viskosität aufweisen, wobei die Viskosität des ersten Hartlotmaterials höher als die Viskosität des zweiten Hartlotmaterials ist.

6. Verfahren zum Bilden einer Sonde für eine Luftdatensonde, wobei das Verfahren Folgendes umfasst:
Wickeln eines Heizkabels um eine Innenskelettstruktur (902),
Einsetzen mindestens eines Abschnitts der Innenskelettstruktur und des Heizkabels in eine poröse Metallabdeckung (904),
Aufbringen einer Hartlotfüllmasse auf die poröse Metallabdeckung (906) und
Erwärmen der porösen Metallabdeckung, der Hartlotfüllmasse und der Innenskelettstruktur (908) derart, dass die Hartlotfüllmasse Spalte zwischen dem Heizkabel und der Innenskelettstruktur im Wesentlichen füllt und Spalte in der porösen Metallabdeckung im Wesentlichen füllt.

7. Verfahren nach Anspruch 6, wobei das Wickeln des Heizkabels um die Innenskelettstruktur das Wickeln des Heizkabels in einem Kanal auf einer Außenfläche der Innenskelettstruktur umfasst.

8. Verfahren nach Anspruch 6, wobei das Aufbringen einer Hartlotfüllmasse das Aufbringen einer Hartlotfüllmasse mit einer ersten, geringeren Viskosität in den Kanal und das Aufbringen einer zweiten Hartlotfüllmasse mit einer zweiten, höheren Viskosität auf die poröse Metallabdeckung umfasst.

9. Verfahren nach Anspruch 6, wobei das Einsetzen mindestens eines Abschnitts der Innenskelettstruktur das Einsetzen mindestens eines Abschnitts der Innenskelettstruktur in einen ausdehnbaren Metall-Stent oder ein gewirktes Drahtgitter oder ein geflochtenes Metallgitter oder eine perforierte Röhre oder eine gesinterte Gitterröhre umfasst.

10. Verfahren nach Anspruch 6 und ferner die maschinelle Bearbeitung einer Außenfläche der porösen Metallabdeckung nach dem Erwärmen der porösen Metallabdeckung, der Hartlotfüllmasse und der Innenskelettstruktur umfassend.

## Revendications

1. Partie de sonde (102) d'une sonde de données aérodynamiques (100), la partie de sonde comprenant :
une structure d'endosquelette (110) ayant une surface externe (113) ;
un câble chauffant (108, 108a) disposé le long de la surface externe de la structure d'endosquelette ;
un manchon poreux (112), entourant la structure d'endosquelette et le câble chauffant ; et
un matériau d'apport de brasage qui remplit en grande partie les trous entre le câble chauffant et la structure d'endosquelette et qui remplit en grande partie les trous dans le manchon métallique poreux.

2. Partie de sonde de la revendication 1, dans laquelle la surface externe de l'endosquelette contient un canal (111) et dans laquelle le câble chauffant est disposé dans le canal.

3. Partie de sonde de la revendication 1, dans laquelle le manchon poreux comprend un treillis fabriqué à partir d'un ou plusieurs composés parmi l'acier inoxydable, le titane, le Nitinol, un alliage de nickel, un alliage de platine, un alliage de magnésium, ou le niobium.

4. Partie de sonde de la revendication 1, dans laquelle le manchon poreux comprend un élément parmi un stent métallique expansible, un treillis métallique tricoté, un treillis métallique tressé, un tube perforé, ou un tube grillagé fritté.

5. Partie de sonde de la revendication 1, dans laquelle le matériau d'apport de brasage comprend des premier et deuxième matériaux de brasage ayant des viscosités différentes, la viscosité du premier matériau de brasage étant supérieure à la viscosité du deuxième matériau de brasage.

6. Procédé de formation d'une sonde pour une sonde de données aérodynamiques, le procédé comprenant :
l'enroulement d'un câble chauffant autour d'une structure d'endosquelette (902) ;
l'insertion d'au moins une partie de la structure d'endosquelette et du câble chauffant dans un manchon métallique poreux (904) ;
l'application d'un matériau d'apport de brasage au manchon métallique poreux (906) ; et
le chauffage du manchon métallique poreux, du matériau d'apport de brasage et de la structure d'endosquelette (908) pour que le matériau d'apport de brasage remplisse en grande partie les trous entre le câble chauffant et la structure d'endosquelette et remplisse en grande partie les trous dans le métal poreux.

7. Procédé de la revendication 6,
dans lequel l'enroulement du câble chauffant autour de la structure d'endosquelette comprend l'enroulement du câble chauffant dans un canal sur une surface externe de la structure d'endosquelette.

8. Procédé de la revendication 6,
dans lequel l'application d'un matériau d'apport de brasage comprend l'application d'un premier matériau d'apport de brasage ayant une première viscosité, plus faible, dans le canal, et l'application d'un deuxième matériau d'apport de brasage ayant une deuxième viscosité, plus forte, au manchon métallique poreux.

9. Procédé de la revendication 6,
dans lequel l'insertion d'au moins une partie de la structure d'endosquelette comprend l'insertion d'au moins une partie de la structure d'endosquelette dans un élément parmi un stent métallique expansible, un treillis métallique tricoté, un treillis métallique tressé, un tube perforé, ou un tube grillagé fritté.

10. Procédé de la revendication 6,
et comprenant en outre l'usinage d'une surface extérieure du manchon métallique poreux après le chauffage du manchon métallique poreux, du matériau d'apport de brasage et de la structure d'endosquelette.
